(19) Europäisches Patentamt
European Patent Office
Office européen des brevets

(11) **EP 2 088 248 A2**

(12) **EUROPÄISCHE PATENTANMELDUNG**

(43) Veröffentlichungstag:
    **12.08.2009  Patentblatt 2009/33**

(51) Int Cl.:
    **E02B 9/04** *(2006.01)*

(21) Anmeldenummer: **09001559.5**

(22) Anmeldetag: **04.02.2009**

(84) Benannte Vertragsstaaten:
    **AT BE BG CH CY CZ DE DK EE ES FI FR GB GR
    HR HU IE IS IT LI LT LU LV MC MK MT NL NO PL
    PT RO SE SI SK TR**
    Benannte Erstreckungsstaaten:
    **AL BA RS**

(30) Priorität: **06.02.2008  DE 102008007787**

(71) Anmelder: **Gemeindewerk Garmisch-
    Partenkirchen
    82467 Garmisch-Partenkirchen (DE)**

(72) Erfinder: **Rösch, Günther Dipl.-Ing.
    82467 Garmisch-Partenkirchen (DE)**

(74) Vertreter: **Flosdorff, Jürgen
    Alleestrasse 33
    82467 Garmisch-Partenkirchen (DE)**

(54) **Wasserfassung zur Triebwasserentnahme aus Fliessgewässern für kleinere Ausleitungswasserkraftwerke im Mittel- und Hochdruckbereich**

(57)    Die Wasserfassung zur Triebwasserentnahme aus Fließgewässern für kleinere Ausleitungswasserkraftwerke im Mittel- und Hochdruckbereich ist gekennzeichnet durch Drainagerohre, die im wesentlichen über die gesamte Breite des Fließgewässers in die Gewässersohle eingelegt sind. Die Drainagerohre sind zwischen Gabionen bzw. Reihen von Gabionen eingebettet, wobei die Zwischenräume mit Drainagekies gefüllt sind, der die Drainagerohre überdeckt.

## Fig. 2

Schnitt A - A

(1) Drainrohr 300    (2) Gabionen L= 3m
                         0,50 x 0,50
(3) Sammelleitung
Betonrohr 1500

**Beschreibung**

Die Erfindung betrifft eine Wasserfassung zur Triebwasserentnahme aus Fließgewässern für kleinere Ausleitungswasserkraftwerke im Mittel- und Hochdruckbereich.

**Stand der Technik**

Wasserfassungen sind Bauwerke, die der Entnahme und gegebenenfalls Reinigung von Triebwasser aus einem Bach, Fluss, See oder Speicher dienen, das der Triebwasserleitung einer Wasserkraftanlage zugeführt wird.

Die Aufgaben der Wasserfassung sind dabei:

- Verhinderung oder zumindest Verminderung der Geschiebe- und Schwebstoffeinwanderung in die Triebwasserleitung, mit dem Ziel, die Leitung vor Versandung und den Turbinenbereich vor Erosionsschäden und Abnutzung zu schützen;
- Zuleitung des Triebwassers in die Triebwasserleitung mit möglichst geringen Fallhöhenverlusten;
- Fernhalten von Eis und Treibgut aller Art.

Bisher gehören zu den wichtigsten Bauteilen in Fließrichtung dementsprechend:

- Einlaufschwelle als Schutz gegen das Einwandern von Geschiebe;
- Tauchwand mit Pfeilern gegen das Eindringen von Schwimmstoffen und Treibeis;
- Grobrechen am Triebwasserleitungseingang, gegebenenfalls mit Rechenreinigungsmaschine, um grobe Schwimmstoffe, Treibgut und Eis abzuhalten;
- Sandfang mit dazugehörigem Spülkanal und Spülschütz zur Entfernung der feinen Geschiebe- und Schwebstoffe (insbesondere bei Hochdruckanlagen).

(vgl. Giesecke/Mosonyi: Wasserkraftanlagen, Seite 125).

Geläufige Bauartbezeichnungen der Sohlentnahme sind Sohlrechen, Grundrechen, Grundwehr, Coanda-Feinrechen und Tiroler Wehr. Typischerweise wird das Wasser immer über einen in einem Querverbau integrierten mehr oder weniger feinen Rechen oder ein Sieb geleitet. (vgl. Giesecke/Mosonyi: Wasserkraftanlagen, Seite 132 f.).

**Kritik am Stand der Technik:**

Für die Wasserkraftnutzung in Fließgewässern sind in der Regel Querbauwerke erforderlich, um bei lokalen Fallhöhen weitere günstige hydraulische Effekte zu erzielen (Ausnahme: Sohlentnahme, Saugentnahme, natürliche Barrieren). Aufgrund der Korrektionsmaßnahmen, die überwiegend Ende des 19. Jahrhunderts durchgeführt wurden, waren Querbauwerke in vielen Flusssystemen notwendig, um Sohleintiefungen und den daraus folgenden Grundwasserabsenkungen mit Auwaldschädigung entgegen zu wirken. Erst um die Jahrhundertwende wurden Staubauwerke zunächst ergänzend und später vordergründig zum Zweck der Stromerzeugung durch Wasserkraftwerke errichtet.

Staubauwerke sind ökologisch nachteilig, weil der Fließgewässercharakter grundlegend verändert wird. Aquatische Organismen, die Veränderungen der Lebensbedingungen nur in geringem Maße tolerieren, werden aus dem Gewässerabschnitt verdrängt. Die ursprüngliche Biozönose des des aquatischen Lebensraums wird abhängig von der Stauhöhe mehr oder weniger stark umgewandelt. Eine besondere Beeinträchtigung entsteht durch das Versperren der Durchgängigkeit für Fische und Kleinlebewesen. Dieser Nachteil kann nur mit aufwändigen künstlichen Aufstiegshilfen ("Fischpässe") behoben werden.

Insbesondere bei höheren Staubauwerken entsteht eine weitere Fließgewässerproblematik durch Kolmationseffekte, durch Unterbindung der Wechselwirkung mit dem Grundwasser sowie durch die nur noch wenig beeinflussbaren Geschiebe- bzw. Sedimentbewegungen. Das zurückgehaltene Geschiebe und Treibgut muss mit erheblichem Aufwand wieder in das Mutterbett zurück befördert werden. Zusätzlich besteht bei Hochwasserabfluss die Gefahr der Verklausung.

**Aufgabe:**

Entsprechend der EU-Wasserrahmenrichtlinie soll der ökologische Gewässerzustand verbessert oder ein guter Zustand erhalten werden. Des Weiteren werden durch das Erneuerbare-Energien-Gesetz (EEG) ab 1. Januar 2008 nur noch Wasserkraftanlagen gefördert, die entweder bereits bestehende anderen Zwecken dienende Verbauungen nützen oder gänzlich ohne Querverbau auskommen. Letzteres macht die Nutzung von Wasserkraft in alpinen Fließgewässern mit mittleren Höhenunterschieden kaum mehr möglich. Es soll deshalb ein Weg gefunden werden, ohne Querverbau und mit möglichst geringen ökologischen Nachteilen Triebwasser aus Fließgewässern für eine Wasserkraftanlage mit mittlerer bis hoher Fallhöhe zu entnehmen.

Diese Aufgabe wird erfindungsgemäß durch die Merkmale des Patentanspruchs 1 gelöst. Vorteilhafte Weiterbildungen der Erfindung sind durch die Unteransprüche gekennzeichnet.

Das Konzept des Einlaufbauwerks enthält eine flächige, unterirdische Triebwasserentnahme. In der Gewässersohle, vorzugsweise quer zur Fließrichtung, werden Drainagerohre vorzugsweise über die ganze Breite des Gewässers eingelegt. Zur Stabilisierung sind die Rohre vorzugsweise zwischen Gabionen eingebettet. Durch das Füllen der Zwischenräume zwischen den Gabionenreihen mit Drainagekies sind die Rohre gegen Auftrieb gesichert. Die Gabionen sind mit Grobkies (nach Herstellerangabe Körnung 1,5 fach größer als die Maschenweite) gefüllt, wodurch sich deren Wasserdurchlässigkeit ergibt. Zur Sicherung gegen Ausspülen im Hochwasserfall wird die gesamte Anordnung von mit einem mit den Gabionen verbundenen Stahlgitter überdeckt. Die Oberkante ist vorzugsweise eben mit der mittleren natürlichen Gewässersohle. Um die gewünschte Wasserentnahmemenge zu erzielen, können die Rohrreihen entsprechend vervielfacht werden. In Parallelschaltung werden sie dann im Uferbereich in einer Sammelleitung zusammengefasst.

Die Drainagerohre können aber auch schräg zur Fließrichtung oder in Fließrichtung mit Ableitung durch die Böschung verlegt werden, wobei sie in diesem Fall innerhalb der Gabionen angeordnet sein sollten.

Der Entnahmestandort im Flussbett sollte so gewählt werden, dass sich die Fließgewässerstrecke im Beharrungszustand befindet, weil dadurch abflussbezogen alle hydraulischen und flussmorphologischen Parameter weitgehend konstant bleiben. Somit kann eine relativ genaue Dimensionierung der Drainagerohre mit gut prognostizierter Abflussleistung erfolgen. Gravierende betriebliche Störungen sind bei Einhaltung der angeführten Randbedingungen praktisch auszuschließen.

**Hydraulik:**

Der Entnahmevorgang in Filterrohren bzw. Drainagerohren entspricht dem physikalischen Prinzip der Wasserförderung von Horizontalbrunnen. Im Gewässerbett liegen die Rohre in wassergesättigter Umgebung. Sobald in den wassergefüllten Rohren der Abfluss ermöglicht wird, bewirkt der umgebende Überdruck das Eindringen und damit Nachfließen des Wassers in die perforierten Rohre. Durch die gewählte Einbautiefe wird die hydrostatische Druckhöhe $\Delta h \approx$ OW-Rohrachse vorgegeben.

Die hydraulische Bemessung des Entwässerungssystems bewegt sich in den Grenzen zweier konträrer Randbedingungen:

- Filteraufbau für einen möglichst geringen Sedimenteintrag
- Hohe Durchlässigkeit der Filterschicht und hohes Schluckvermögen der Sickerrohre bzw. Drainagerohre.

Die Gewichtung der Kriterien ist abhängig von der geforderten Entsandungsgrenze. Handelsübliche Sickerrohre haben eine Perforationsgröße von 2 bis 2,5 mm und eine Locheintrittsfläche von z.B. 182 cm$^2$/lfm bei Nennweite $D_l$ = 300 mm. Genaue Anforderungen an die Feststoffgröße sind turbinentyp- und insbesondere fallhöhenabhängig (bei h > 100 m, d < 0,05 - 0,1 mm). Falls erforderlich kann auch ein Sandfang der Triebwasserdruckleitung vorgeschaltet werden.

Das Schluckvermögen der Sickerrohre muss grundsätzlich auf unterschiedliche Wasserstände und variable Durchlässigkeit der Filterüberdeckung abgestimmt werden. Im Wesentlichen ist der Wassertransport in die perforierten Rohre von folgenden Einflussgrößen abhängig:

- Druckhöhe (Höhendifferenz zwischen Einstauhöhe und Rohrmitte) "$\Delta h$" [dm]
- Fließverlust Filterkies mit Deckschicht der Flusssohle "$\alpha_o$"
- Wassereintrittsfläche der Filterrohre "$A_S$" [dm/m]
- Anzahl der Löcher "n"
- Eintritts- und Austrittsveriust der geometrischen Lochform "$\alpha$"

Der Zufluss "$Q_{zu}$ [l/s] pro Laufmeter Sickerleitung beträgt:

$$Q_{Zu} = \alpha * \alpha_D * n * A_S * (2g * \Delta h)^{1/2}$$

Daraus lässt sich beispielsweise bei Verwendung handelsüblicher Sickerrohre und bei einer angenommenen Überdeckung von 1,0 m sowie einem Rohrabstand von 1,0 m überschlägig mit

$$Q_{Zu} \approx 1,0 \text{ bis } 2,0 \text{ l/s} * m^2$$

ermitteln, d.h. für eine Entnahme von 1000 l/s würde man eine Sohlfläche von 500 bis 1000 m$^2$ benötigen. Der weitere Fließvorgang kann als Freispiegel- oder Drucksystem ausgeführt werden:

Freispiegelsystem: Hydraulisch getrennt und erfolgt in den verlegten Leitungssträngen bis zum Sammelkanal als instationärer Freispiegelabfluss (kontinuierliche Abflusszunahme).

Drucksystem: Geschlossener Betrieb wobei der Abfluss an Hand des Pegels in einem Sammelbekken, das gleichzeitig als Sandfang gestaltet sein kann, geregelt wird.

**Erzielbare Vorteile**

Die Erfindung entspricht den gesetzlichen Anforderungen und vermeidet alle mit einem Querverbau verbundenen Nachteile. Die Wasserentnahme mit der beschriebenen Erfindung erzielt folgende Vorteile:

- alle Arten von Lebewesen werden sicher aus der Triebwasserleitung zurück gehalten;
- kein Eingriff in die Geschiebeführung;
- kein Eingriff in die Treibgutführung;
- die Durchgängigkeit für Fische und Kleinlebewesen wird in keiner Weise beeinträchtigt;
- die Entnahmestelle bleibt weitgehend unsichtbar, da sie entweder von Kies oder Wasser bedeckt ist;

- das Triebwasser hat durch die Filterwirkung der Drainagerohre einen hohen Reinheitsgrad;
- Wartungsfreiheit im Gegensatz zu herkömmlichen Rechen- und Spülanlagen;
- keine Hochwasserschutzbauten notwendig.

Der mit dem Verzicht des Querverbaues zum Aufstau verbundene geringe Fallhöhenverlust ist bei Kraftwerken im Mitteldruckbereich leicht vertretbar. Mit dem Entnahmekonzept wird aus hydraulischen, wirtschaftlichen und insbesondere ökologischen Gründen nur ein verhältnismäßig kleiner Abflussanteil bezogen auf die mittlere Abflussmenge MQ entnommen. Mit kleinen Entnahmemengen kann im Mitteldruck- und Hochdruckbereich immer noch eine stattliche Menge an elektrischer Energie erzeugt werden. Um dem hohen ökologischen Anspruch gerecht werden zu können, muss bei Niedrigwasserabfluss ein ausreichender Restwasserabfluss in der Ausleitungsstrecke gewährleistet werden, wozu eine kontrollierte Abflussentnahme erforderlich ist. Dies ist durch Drosselung der Turbine bis zum Verschluss möglich. Der Einstau in die Sickerrohre verändert die Druckverhältnisse bis zur Nullentnahme.

Die Entnahme nahezu ohne ökologische Nachteile eröffnet die Wasserkrafterschließung von Fließgewässern mit mittlerem Gefälle, wie sie in voralpinen und alpinen Regionen verbreitet vorzufinden sind. Für diese insbesondere in den Gebirgsregionen vorhandenen Standortbedingungen kann somit ein hoher gesamtökologischer Anspruch einer schadstofffreien und regenerativen Energieerzeugung realisiert werden, wobei gleichzeitig die hohe Effizienz der Wasserkrafttechnik gewährleistet bleibt.

Systembedingt wird im Vergleich zu bestehenden Flusskraftwerken nur ein sehr geringer Ausbaugrad erfolgen, d.h. der überwiegende Abfluss verbleibt im Mutterbett, so dass die gesamte Ökologie des Fließgewässers einschließlich der Uferbereiche nahezu unberührt bleiben und somit auch in der Summe keine spürbaren Eingriffe durch die Wasserkraftnutzung erfolgen. Die baulichen Eingriffe im Flussbett sind gering und könnten in kurzer Bauzeit abgewickelt werden. Da auch keine Abdichtungsschürzen im Untergrund erforderlich sind und die Entnahme über einen großflächigen Bereich mit nur marginalen Wasserstandsabsenkungen erfolgt, bleibt die Vernetzung der Grundwasser- und Untergrundströmung und deren Druckgradienten praktisch unbeeinflusst.

Zusammenfassend sieht die Erfindung eine verbaulose Wasserfassung zur Sohlentnahme aus Fließgewässern mit Hilfe von Drainagerohren vor, die zwischen Gabionen eingebettet sind. Die ökologisch vorteilhafte Querverbaufreiheit wird durch Einbau der Anlage eben zur mittleren Gewässersohle erreicht.

Dabei zeigen:

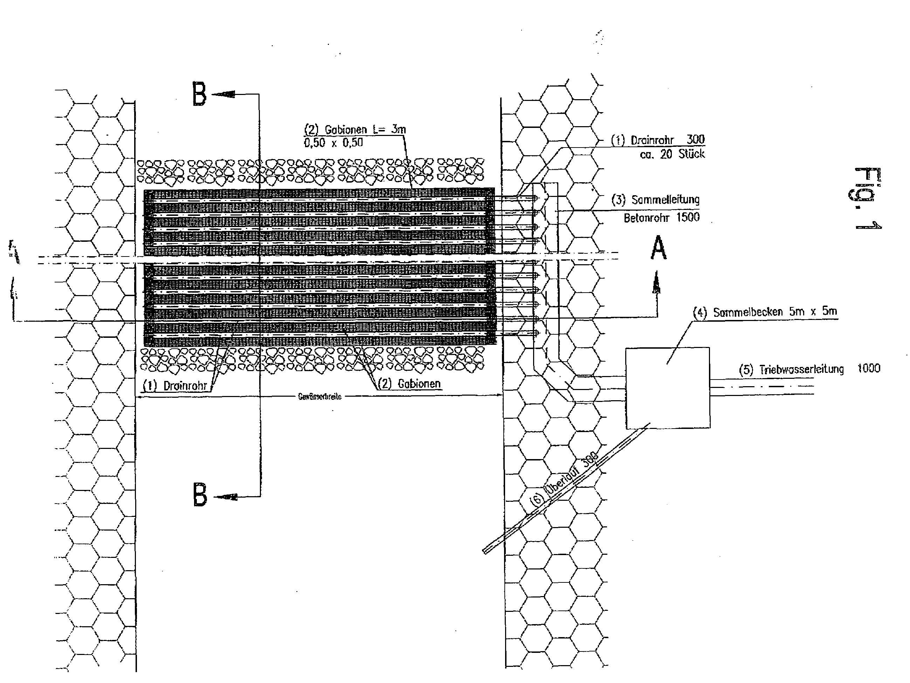

Figur 1    einen Lageplan einer erfindungsgemäßen Drainageanlage;

Figur 2    einen Schnitt A-A in Figur 1 und

Figur 3    einen Schnitt B-B in Figur 1.

Der weitgehend schematische Lageplan lässt erkennen, dass Drainagerohre 1 parallel zueinander quer zur Fließrichtung in einem Fließgewässer angeordnet sind. Die Drainagerohre erstrecken sich im wesentlichen über die gesamte Breite B der Gewässersohle des Fließgewässers.

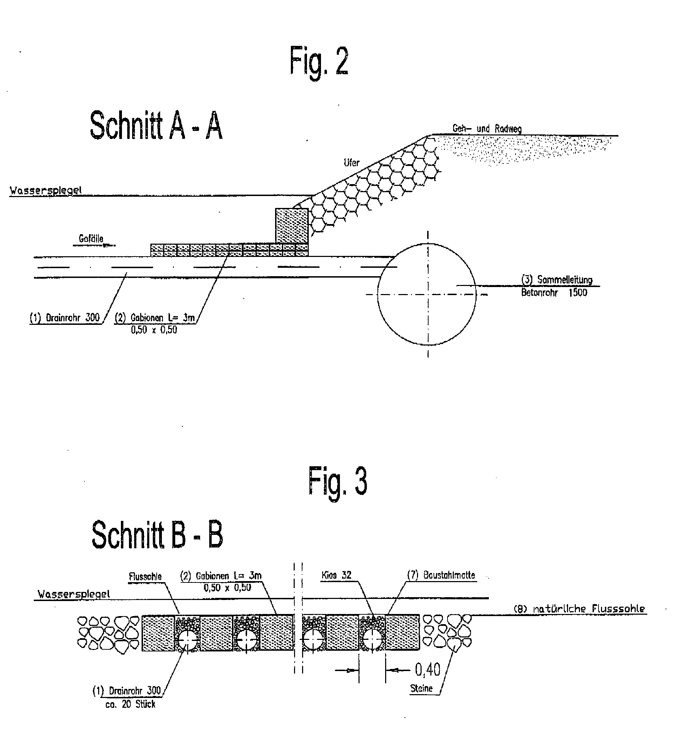

Die Drainagerohre 1 liegen zwischen Reihen von Gabionen 2, wobei die verbliebenen Zwischenräume zwischen den Gabionenreihen mit Drainagekies (Figur 3) ausgefüllt sind.

Die Drainagerohre 1 münden in der Böschung in ein quer zu ihnen verlaufendes Sammelrohr 3 ein, das in ein Sammelbecken 4 einmündet, von dem eine Triebwasserleitung 5 abgeht. Das Sammelbecken 4 ist über einen Überlauf 6 mit dem Bett des Fließgewässers verbunden.

Figur 2 zeigt, dass die Drainagerohre 1 mit Gefälle zu der Sammelleitung 3 verlaufen.

Die Drainagerohre 1 und die Gabionen 2 sind in die Gewässersohle eingelegt. Die Gabionen 2 und die bündig mit diesen oben abschließende Kiesfüllung sind von einer Baustahlmatte 6 überdeckt, die an den Gabionen 2 befestigt ist. Die Baustahlmatte verläuft eben bzw. bündig mit der natürlichen Flußsohle 8.

Wenn der Abfluss aus der Sammelleitung 3 durch eine hierzu geeignete Einrichtung (Schieber) entsprechend gedrosselt wird, staut sich Wasser in den Drainagerohren zurück. Mit dem Einstau entsteht ein Druck in den Drainagerohren, der dem Druck der Wassersäule zwischen den Drainagerohren und dem Wasserspiegel des Fließgewässers entgegenwirkt. Bei Druckgleichheit wird dem Fließgewässer kein Wasser mehr entnommen. Hierdurch kann die entnommene Wassermenge gesteuert werden. Bei einem geschlossenen Drucksystem bis zu der Turbine kann diese Steuerung auch durch entsprechende Drosselung der Turbine erfolgen.

**Patentansprüche**

1. Wasserfassung zur Treibwasserentnahme aus Fließgewässern für kleinere Ausleitungswasserkraftwerke im Mittel- und Hochdruckbereich, **gekennzeichnet durch** Drainagerohre (1), die in die Gewässersohle eingelegt sind.

2. Wasserfassung nach Anspruch 1, **dadurch gekennzeichnet,** **dass** die Drainagerohre (1) quer zur Fließrichtung angeordnet sind.

3. Wasserfassung nach Anspruch 1 oder 2,

**dadurch gekennzeichnet,**
**dass** sich die Drainagerohre (1) im wesentlichen über die gesamte Breite (B) des Fließgewässers erstrecken.

4. Wasserfassung nach Anspruch 1,
**dadurch gekennzeichnet,**
**dass** die Drainagerohre wenigstens teilweise in Fließrichtung oder im Winkel dazu angeordnet sind.

5. Wasserfassung nach Anspruch 4,
**dadurch gekennzeichnet,**
**dass** die Drainagerohre innerhalb von Gabionen angeordnet sind.

6. Wasserfassung nach einem der Ansprüche 1 bis 4,
**dadurch gekennzeichnet,**
**dass** die Drainagerohre (1) zwischen Gabionen (2) bzw. Reihen von Gabionen (2) eingebettet sind.

7. Wasserfassung nach Anspruch 6,
**dadurch gekennzeichnet,**
**dass** die Zwischenräume zwischen den Gabionenreihen (2) mit Drainagekies gefüllt sind, der die Drainagerohre (1) überdeckt.

8. Wasserfassung nach einem der Ansprüche 5 bis 7,
**dadurch gekennzeichnet,**
**dass** ein aus Metall, vorzugsweise aus Stahl bestehendes Gitter (6) die Oberseite der Gabionen (2) überdeckt und an diesen befestigt ist.

9. Wasserfassung nach einem der Ansprüche 5 bis 8,
**dadurch gekennzeichnet,**
**dass** die Oberkante der Gabionen (2) bzw. das Metallgitter (6) im wesentlichen eben mit der mittleren natürlichen Gewässersohle angeordnet ist.

10. Wasserfassung nach einem der Ansprüche 1 bis 9,
**dadurch gekennzeichnet,**
**dass** das entnommene Wasser im Freispiegelsystem weitergeleitet wird.

11. Wasserfassung nach einem der Ansprüche 1 bis 10,
**dadurch gekennzeichnet,**
**dass** das entnommene Wasser im Drucksystem weitergeleitet wird.

12. Wasserfassung nach einem der Ansprüche 10 oder 11,
ferner **gekennzeichnet durch**
ein Sammelbecken (4), das mit einem Sandfang versehen ist

## Fig. 1

(1) Drainrohr 300 ca. 20 Stück

(3) Sammelleitung Betonrohr 1500

(4) Sammelbecken 5m x 5m

(5) Triebwasserleitung 1000

(6) Überlauf 500

(2) Gabionen L= 3m

(2) Gabionen 0,50 x 0,50

(2) Gabionen

(1) Drainrohr

Gewässersohle

A

B   B

# Fig. 2

## Schnitt A - A

Geh- und Radweg

Ufer

Wasserspiegel

Gefälle

(3) Sammelleitung
Betonrohr   1500

(1) Drainrohr 300

(2) Gabionen L= 3m
0,50 x 0,50

# Fig. 3

## Schnitt B - B

Flusssohle      (2) Gabionen L= 3m
0,50 x 0,50

Kies 32      (7) Baustahlmatte

Wasserspiegel

(8) natürliche Flusssohle

(1) Drainrohr 300
ca. 20 Stück

0,40

Steine